# DEMANDE DE BREVET EUROPEEN

(11) **EP 4 181 253 A1**
(43) Date de publication de la demande: **17.05.2023**
(21) Numéro de dépôt: 21207928.9
(22) Date de dépôt: 12.11.2021
(51) Int. Cl.: H01M 8/2465, B60K 1/00, H01M 8/2475, H01M 8/248, H01M 8/249, H01M 8/10

(54) **BLOC-PILE À COMBUSTIBLE**

(71) Demandeur: Greengt SA, 1015 Lausanne (CH)
(72) Inventeur: MOUREAU, Eric, 74500 EVIAN-LES-BAINS (FR)
(74) Mandataire: Micheli & Cie SA

(57) **Abrégé**

Le bloc-pile à combustible pour véhicule à propulsion électrique, comporte au moins une pile à combustible (13) et une coque (1) contenant la pile à combustible (13). La coque (1) comporte au moins une ouverture donnant accès à un logement et la pile à combustible (13) est insérée dans l'ouverture par une de ses extrémités, de façon qu'une (17) des deux plaques terminales de la pile à combustible se trouve à l'intérieur du logement, alors que l'autre extrémité de la pile à combustible dépasse hors de l'ouverture. La plaque terminale (15) qui se trouve à l'extérieur de la coque (1) comporte une portée périphérique (29) prévue pour être maintenue en appui contre le pourtour de l'ouverture. Enfin, les entrées et les sorties pour le gaz réactif d'anode, le gaz réactif de cathode et le fluide de refroidissement sont agencées sur la plaque terminale (15) qui se trouve à l'extérieur de la coque.

## Description

La présente invention concerne un bloc-pile à combustible destiné à alimenter un véhicule à propulsion électrique, et destiné plus particulièrement à alimenter un véhicule automobile à propulsion électrique, notamment un véhicule à propulsion électrique pour la course sur circuit. Précisons que le terme de « véhicule » désigne ici de manière générale tout moyen de transport susceptible d'avoir une motorisation électrique (par exemple : voiture, véhicule automobile utilitaire, motocycle, hélicoptère, avion, drone, bateau...). Le bloc-pile à combustible comporte :
- au moins une pile à combustible comprenant deux plaques terminales, un empilement de cellules à combustible comprimé entre les deux plaques terminales, et une structure de liaison ancrée solidement sur les deux plaques terminales et précontrainte de manière à tirer ces dernières, l'une en direction de l'autre, pour comprimer l'empilement de cellules à combustible, et comprenant en outre des entrées et des sorties pour un gaz réactif d'anode, un gaz réactif de cathode et un fluide de refroidissement ;
- une coque comprenant un logement à l'intérieur pour ladite au moins une pile à combustible, et comportant une ouverture donnant accès au dit logement.

### ART ANTERIEUR

Une pile à combustible consiste en un empilement de cellules électrochimiques à combustible qui sont reliées électriquement en série. Lorsqu'elles sont alimentées par un flux de carburant et par un flux de comburant, les cellules électrochimiques d'une pile à combustible sont le théâtre d'une réaction électrochimique contrôlée qui produit de l'énergie électrique, ainsi que des produits de réaction et de la chaleur.

Les cellules électrochimiques des piles à combustible destinées aux applications dans le domaine de la propulsion automobile sont généralement du type comportant une membrane électrolyte en polymère (en anglais PEM) arrangée entre deux électrodes poreuses (une cathode et une anode). La PEM est agencée en sandwich entre l'anode et la cathode, et l'assemblage de ces trois éléments forme ce qu'on appelle un ensemble membrane-électrodes (en anglais MEA). Afin de favoriser la réaction électrochimique souhaitée, l'anode et la cathode de la MEA comprennent généralement chacune une première couche agencée à proximité immédiate de la membrane, qui comprend un ou plusieurs catalyseurs, ainsi que d'autres matériaux tels que des particules de carbone. Chacune des électrodes de la MEA comprend en outre une couche de diffusion des gaz (en anglais GDL) agencée sur l'une au moins des faces externes de la MEA. Les GDL sont non seulement perméables aux gaz, mais également conductrices de l'électricité. Chaque GDL relie ainsi la première couche d'une des électrodes poreuses à la face correspondante de la MEA. Les pores des GDL sont habituellement de grandes dimensions, alors que les pores que présentent les premières couches sont très petits. C'est la raison pour laquelle il est également connu d'intercaler une couche conductrice poreuse de transition (en anglais MPL) entre la première couche et la GDL, de façon à former une phase intermédiaire entre les pores de grandes dimensions de la GDL et les pores beaucoup plus petits de la première couche. On parle alors d'une MEA à sept couches (contre cinq dans le cas où il n'y a pas de couche poreuse de transition).

Une cellule électrochimique à PEM fonctionne selon le principe suivant. Un flux d'hydrogène (le carburant) est fourni à la cellule à travers l'anode poreuse. En atteignant la première couche de l'anode, l'hydrogène est oxydé par le ou les catalyseurs présents, provoquant l'apparition de cations (des protons) et d'électrons. Les protons peuvent migrer à travers la membrane électrolyte en direction de la cathode. Simultanément, un flux d'un gaz contenant de l'oxygène (le comburant) est fourni du côté de la cathode. L'oxygène se déplace à travers la cathode poreuse et réagit avec les protons qui ont traversé la membrane électrolyte. Les électrons, pour leur part, passent de l'anode à la cathode en empruntant un conducteur externe, ce qui engendre un courant électrique. La réaction électrochimique entre l'hydrogène et l'oxygène produit également de la chaleur. Cette chaleur à tendance à faire augmenter la température de la pile à combustible.

Dans le but d'obtenir une quantité importante d'énergie électrique, il est connu d'empiler un certain nombre de cellules électrochimiques. Dans ce cas, on intercale une paroi de séparation en un matériau conducteur de l'électricité entre chaque cellule de façon à ce que ces dernières soient reliées en série. Un tel empilement de cellules électrochimiques est appelé une pile à combustible, et les parois de séparation entre les cellules sont appelées des séparateurs bipolaires. Les cellules électrochimiques et les séparateurs bipolaires sont encore comprimés entre deux plaques terminales afin d'assurer, d'une part, l'étanchéité des différents circuits dans lesquels circulent les gaz réactifs et le fluide de refroidissement, et d'assurer d'autre part un bon contact électrique entre les éléments empilés. A cet fin, la pile à combustible comprend habituellement une structure de liaison agencée pour pousser les deux plaques terminales l'une en direction de l'autre. De façon classique, la structure de liaison peut comporter une pluralité de goujons présentant des extrémités filetées qui sont boulonnées sur les deux plaques terminales de manière à engendrer la force de serrage nécessaire entre les plaques. On connait également d'autres types de structures de liaison. A titre d'exemple, une structure de liaison peut être constituée par un boîtier de compression dans lequel l'empilement de cellules à combustible est logé.

Une pile à combustible habituelle est donc essentiellement constituée d'un empilement au sein duquel alternent MEA et séparateurs bipolaires. Ainsi, on trouve normalement toujours un séparateur bipolaire intercalé entre deux ensembles membrane-électrodes, et réciproquement, un ensemble membrane-électrodes est normalement toujours pris en sandwich entre deux séparateurs bipolaires. En plus de servir de paroi étanche entre deux cellules à combustible voisines, les séparateurs bipolaires sont généralement conçus pour permettre l'alimentation et le refroidissement de la pile à combustible. A ce titre, chaque séparateur bipolaire comporte généralement trois types de conduits ; des conduits servant de passage pour le gaz combustible fourni à l'anode, des conduits servant de passage pour le comburant gazeux fourni à la cathode, et enfin, des conduits servant de passage pour le liquide de refroidissement.

D'autre part, quel que soit le mode de propulsion utilisé, le châssis d'un véhicule doit faire preuve d'une rigidité suffisante pour résister aux accélérations et donc aux forces d'inertie. De plus, le châssis doit encore résister à des forces exercées par le milieu ambiant (inégalités du terrain dans le cas des véhicules à roues, turbulences dans le cas des aéronefs, vagues dans le cas des bateaux) qui se combinent avec celles liées aux accélérations. En même temps, le poids d'un véhicule devrait de préférence être réduit au minimum. Une solution pour satisfaire à ces deux impératifs contradictoires est d'assembler directement les uns aux autres les différents constituants du véhicule, de manière à ce que les constituant eux-mêmes assurent (ou tout au moins contribuent à assurer) la rigidité de la structure. L'idéal, du point de vue du poids est bien sûr de se passer totalement de châssis et de faire en sorte que les différents éléments assemblés constituent une structure autoportante possédant une rigidité suffisante. Dans le cas particulier d'une voiture de course à propulsion électrique, qui est alimentée par une ou plusieurs piles à combustible, les différents constituants susceptibles d'être assemblés directement les uns aux autres, de façon qu'ils contribuent eux-mêmes à la rigidité de la structure, sont principalement le train avant, l'habitacle, le bloc-pile à combustible et le train arrière. Les moteurs électriques étant normalement plus petits et plus légers que les moteurs à essences, ils peuvent par exemple être intégrés dans le train arrière comme décrit dans le document de brevet EP2210757A1. Quel que soit le type de véhicule, un besoin se fait sentir de disposer d'un bloc-pile à combustible qui soit à la fois très léger est suffisamment résistant aux contraintes mécaniques pour être intégré dans une structure autoportante.

En outre, concernant encore l'exemple des voitures conçues pour la course sur circuit, il est important de noter que ces dernières doivent posséder tout un éventail de qualités dont on n'aurait même pas idée en matière de voitures de tourisme, et cela, quel que soit leur mode de propulsion. Parmi les éléments propres à la course automobile, il y notamment l'arrêt au stand. Son déroulement est critique. En effet, il est facile de comprendre que, durant la course, un changement de pneu, ou une réparation, doit être effectué le plus rapidement possible, faute de quoi le pilote perdra toutes ses chances de victoire. En sport automobile, le succès ne se joue donc pas uniquement sur la piste. Dans le cas d'une voiture de course à propulsion électrique qui est alimentée par une ou plusieurs piles à combustible, ces piles à combustibles devraient notamment pouvoir être changées en cas de besoin avec une rapidité au moins égale à celle dont on fait preuve aujourd'hui pour changer les roues d'un véhicule. Un besoin se fait donc sentir de disposer d'un bloc-pile à combustible qui permette d'effectuer le remplacement d'une pile à combustible de façon à la fois simple et rapide.

Un autre problème est que les piles à combustibles à membranes électrolyte en polymère sont des structures qui possèdent par construction une certaine souplesse, mais dont les performances risquent d'être compromises si elles sont même légèrement déformées en flexion ou en torsion. Pour un fonctionnement optimal du bloc-pile à combustible d'un véhicule, il serait souhaitable que la coque du bloc-pile à combustible soit agencée de manière à offrir une bonne assise à la (aux) pile(s) à combustible, sans compliquer pour autant la mise en place et le retrait de cette (de ces) dernière(s).

### BREF EXPOSE DE L'INVENTION

Un but de la présente invention est de remédier aux inconvénients de l'art antérieur qui viennent d'être expliqués. La présente invention atteint ce but ainsi que d'autres en fournissant un bloc-pile à combustible pour véhicule à propulsion électrique qui est conforme à la revendication 1 annexée.

Conformément à l'invention, ladite au moins une pile à combustible étant insérée dans l'ouverture par une de ses extrémités, de façon qu'une des plaques terminales (dite petite plaque terminale) se trouve à l'intérieur du logement, alors que l'autre extrémité de la pile à combustible dépasse hors de l'ouverture, l'autre plaque terminale (dite grande plaque terminale) se trouvant à l'extérieur de la coque. Les entrées et les sorties pour le gaz réactif d'anode, le gaz réactif de cathode et le fluide de refroidissement étant agencées sur la grande plaque terminale, et cette dernière comportant une portée périphérique prévue pour être maintenue en appui contre le pourtour de l'ouverture.

On comprendra de ce qui précède que les entrées et les sorties pour le gaz réactif d'anode, le gaz réactif de cathode et le fluide de refroidissement sont toutes accessibles depuis l'extérieur de la coque, de sorte que la pile à combustible peut être introduite dans le logement ou retirée de celui-ci de manière simple. De plus, comme la grande plaque terminale est agencée de manière à recouvrir l'ouverture lorsque la pile à combustible est en place dans le logement, il n'est pas nécessaire de prévoir de panneau ou de couvercle pour fermer l'ouverture. Enfin, les raccords pour les conduits alimentant la pile à combustible en gaz réactif et en fluide de refroidissement sont accessibles depuis l'extérieur de la coque.

Selon un premier mode de réalisation avantageux, la portée périphérique de la grande plaque terminale est prévue pour être fixée sur la coque en au moins deux points lorsque la pile à combustible est en place. On comprendra, qu'une fois fixée, la grande plaque terminale participe à la rigidité du bloc-pile à combustible.

Selon un deuxième mode de réalisation avantageux, la coque comprend un guide agencé dans le logement de façon à coopérer avec la petite plaque terminale pour la guider lors de la mise en place de la pile à combustible dans le logement, ainsi que pour maintenir la petite plaque terminale dans sa position lorsque la pile à combustible est en place. On comprendra que la présence d'un guide réduit le risque que la pile à combustible ne soit déformée par les forces d'inertie engendrées lors des déplacements d'un véhicule, ou par une manipulation imprécise lors de la mise en place ou du retrait de la pile à combustible.

Selon une variante préférée du deuxième mode de réalisation, le guide comprend d'une part au moins une cavité aménagée dans une paroi disposée au fond du logement à l'opposé de l'ouverture, et d'autre part au moins une broche montée sur la petite plaque terminale de la pile à combustible et orientée dans la direction d'empilement des cellules à combustible, la broche étant agencée pour venir s'insérer dans la cavité, et pour être guidée par celle-ci, lorsque la pile à combustible est mise en place dans la coque.

### BREVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1 est une vue en perspective de trois-quarts montrant le côté avant et le côté latéral gauche d'un bloc-pile à combustible qui est conforme à un mode de réalisation particulier de l'invention ;
- la figure 2 est une vue en perspective de trois-quarts montrant le côté arrière et le côté latéral droit du bloc-pile à combustible de la figure 1 ;
- la figure 3 est une vue de côté montrant le côté latéral droit du bloc-pile à combustible des figures 1 et 2 ;
- la figure 4 est une vue en coupe selon B-B de la figure 3 ;
- la figure 5 est un dessin à deux vues reprenant la vue de côté de la figure 3 et lui associant une vue en coupe selon A-A de la vue de côté ;
- la figure 6 est une vue en perspective de trois-quarts d'une des piles à combustible du bloc-pile à combustible des figures 1 à 5 ;
- la figure 7 est une vue partielle agrandie d'une partie de la vue en coupe de la figure 5 montrant plus particulièrement des connecteurs électriques femelles de deux piles à combustible, ainsi qu'une barre de pontage agencée pour relier les deux connecteurs électriques femelles à travers la paroi séparant les logements des deux piles à combustible ;
- la figure 8 est une vue partielle agrandie d'une partie de la vue en coupe de la figure 5 montrant le montage d'un des connecteurs électriques femelles de la figure dans la plaque terminale d'une pile à combustible.

### DESCRIPTION DETAILLEE D'UN MODE DE REALISATION

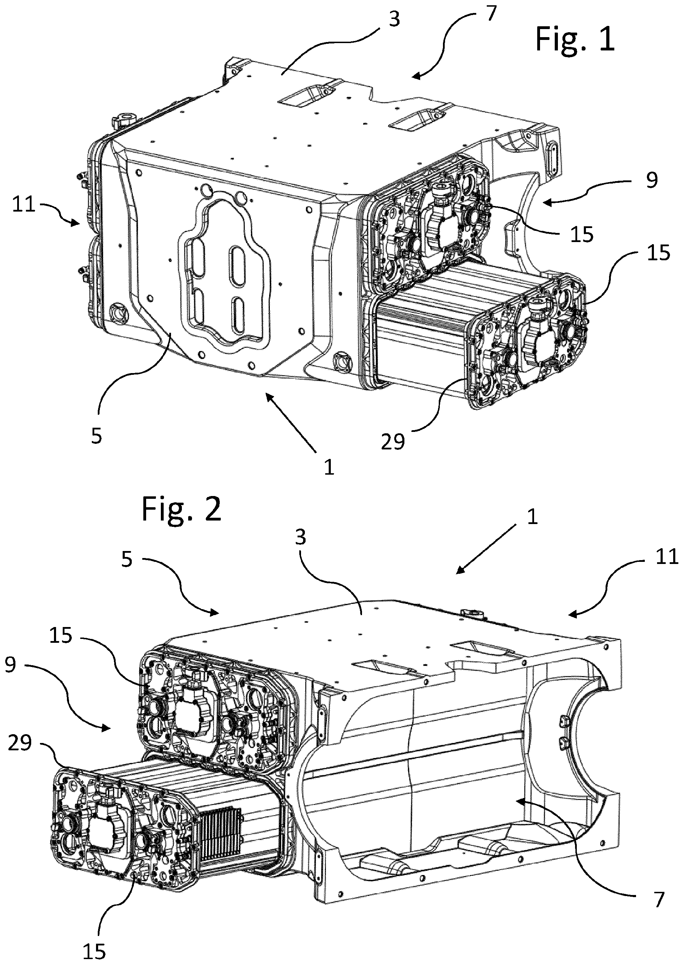

Les figures annexées montrent différentes parties d'un bloc-pile à combustible qui est conforme à un mode de réalisation exemplaire de l'invention. Comme le montre notamment les vues en perspectives des figures 1 et 2, le bloc-pile à combustible comprend une coque (référencée 1) qui présente la forme générale d'un parallélépipède avec un côté de dessus 3, un côté de dessous (non représenté), un côté avant 7, un côté arrière 5 et deux côtés latéraux respectivement droit 9 et gauche 11. La coque 1 est de préférence réalisée en un matériau composite comme la fibre de verre ou la fibre de carbone. Le bloc-pile à combustible illustré est conçu pour alimenter un véhicule automobile à propulsion électrique. A cet effet, il comprend quatre piles à combustible. En se référant toujours aux mêmes figures, on peut voir encore que la coque 1 comporte deux paires d'ouvertures superposées qui sont agencées symétriquement, une des paires s'ouvrant sur le côté latéral gauche et l'autre sur le côté latéral droit. On peut voir également que chaque pile à combustible est insérée dans l'une des quatre ouvertures.

Le véhicule à propulsion électrique qui est équipée du bloc-pile à combustible 1 du présent exemple est destiné à la course automobile sur circuit. Dans le présent exemple, les constituants principaux de la voiture de course (le bloc-pile à combustible, mais également des constituants qui ne sont pas illustrés, comme le train avant, l'habitacle, et le train arrière avec ses deux moteurs) sont assemblés directement les uns aux autres, de manière à constituer une structure autoportante possédant une rigidité suffisante pour remplir la fonction de châssis pour le véhicule. La coque 1 est ainsi prévue pour être assemblée à l'habitacle par son côté avant 7 et au train arrière par son côté arrière 5. En se référant plus particulièrement à la figure 1B, on peut voir que le côté avant 7 de la coque 1 comporte également une cavité prévue pour contenir un réservoir d'hydrogène monté horizontalement et transversalement entre le bloc-pile à combustible et l'habitacle (non représenté). On comprendra de plus que les deux côtés latéraux 9 et 11 sont dits « droit » et « gauche » parce qu'ils sont destinés à se trouver respectivement du côté droit et du côté gauche de l'automobile équipée du bloc-pile à combustible.

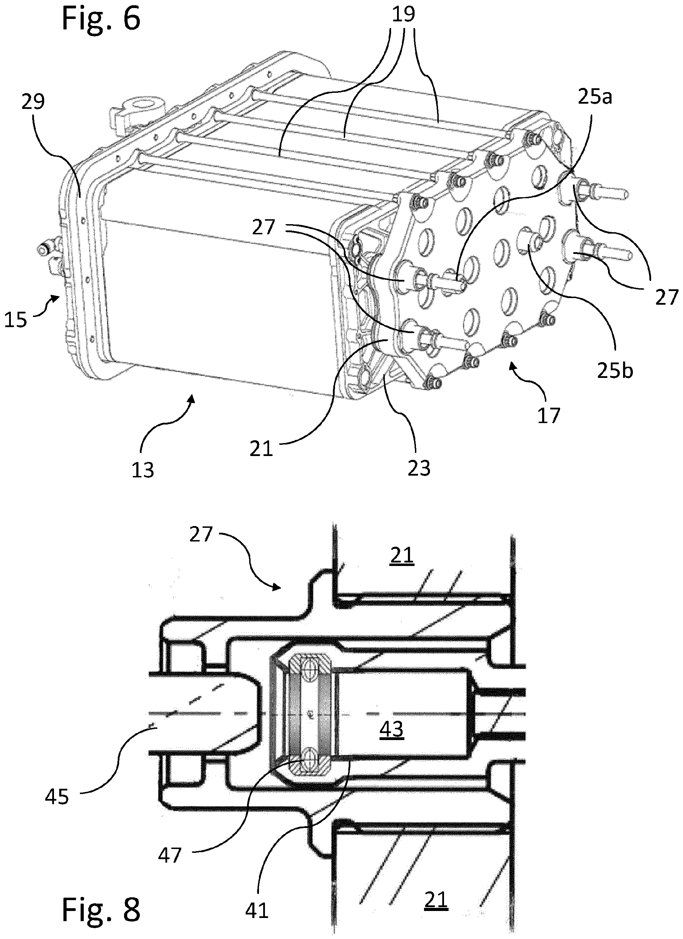

La vue en perspective de la figure 6 montre une seule des quatre piles à combustible sans les autres constituant du bloc-pile à combustible. En se référant à cette figure, on peut voir que la pile à combustible (référencée 13) comprend deux plaques terminales (référencées 15 et 17) et un empilement de cellules à combustible planes comprimées entre les deux plaques terminales (afin de ne pas surcharger le dessin, les cellules à combustible individuelles ne sont pas représentées. Toutefois, le contour extérieur de l'empilement de cellules est visible dans la figure, entre les deux plaques terminales 15, 17). La pile à combustible 13 comprend également une structure de liaison dont la fonction est d'engendrer une force de compression permettant de comprimer l'empilement de cellules à combustible entre les deux plaques terminales 15, 17. Dans le présent exemple, la structure de liaison comprend huit goujons (référencés 19) qui sont agencés parallèlement à la direction d'empilement et boulonnés par leurs extrémités aux deux plaques terminales. De façon connue en soi, la présence d'une telle structure de liaison permet d'une part de garantir l'étanchéité de la pile à combustible, et d'autre part d'avoir une répartition uniforme de la conduction électrique dans les cellules à combustible. De manière connue en soi, les cellules à combustible qui sont comprimées entre les plaques terminales d'une pile à combustible sont reliées électriquement en série, de sorte que la pile à combustible comporte un pôle positif et un pôle négatif qui sont situés aux extrémités opposées de l'empilement. Chaque extrémité de l'empilement comporte en outre un collecteur de courant qui est associé à la plaque terminale agencée à la même extrémité. Chaque collecteur de courant est en outre relié électriquement à une borne de connexion électrique que présente cette plaque terminale.

Les deux plaques terminales 15, 17 de la pile à combustible du présent exemple ne sont pas identiques. En se référant toujours à la figure 6, on peut voir notamment que la plaque terminale référencée 17 n'est pas monolithique. Il s'agit au contraire d'un ensemble d'éléments distincts qui sont reliés les uns aux autres. Ces éléments sont principalement une structure (ou plaque) porteuse (référencée 21), une plaque de fermeture (référencée 23) et un collecteur de courant (non représenté). Comme on peut le voir, les goujons 19 de la structure de liaison sont boulonnés sur la structure porteuse 21, alors la plaque de fermeture 23 et le collecteur de courant sont pris en sandwich entre la structure porteuse 21 et l'extrémité de l'empilement de cellules à combustible. La structure porteuse 21 et la plaque de fermeture 23 sont en outre maintenues espacées l'une de l'autre par une pluralité de ressorts de compression (non représentés). Dans l'exemple illustré, la structure porteuse 21 se présente sous la forme d'une plaque percée de plusieurs rangées d'ouvertures circulaires. On comprendra que les ouvertures circulaires donnent notamment accès à la plaque de fermeture 23. A l'extrémité opposée de la pile à combustible 13, l'autre plaque terminale (référencée 15) présente la particularité de comporter une portée périphérique 29. Cette portée périphérique est d'ailleurs la seule partie de la plaque terminale 15 qui est visible dans la figure 6. Les figures 1 et 2, en revanche, montrent le côté extérieur de la plaque terminale 15 de chacune des quatre piles à combustible. En se référant à nouveau à ces deux figures, on peut notamment observer que la portée périphérique 29 est dimensionnée de manière à lui permettre de venir en appui contre le pourtour de l'ouverture de la coque 1 dans laquelle la pile à combustible 13 est insérée. On comprendra qu'en raison de la présence de la portée périphérique, la surface de la plaque terminale 15 est plus importante que celle de la plaque terminale 17. C'est la raison pour laquelle les plaques terminales 15 et 17 seront appelées ci-après respectivement la grande et la petite plaque terminale.

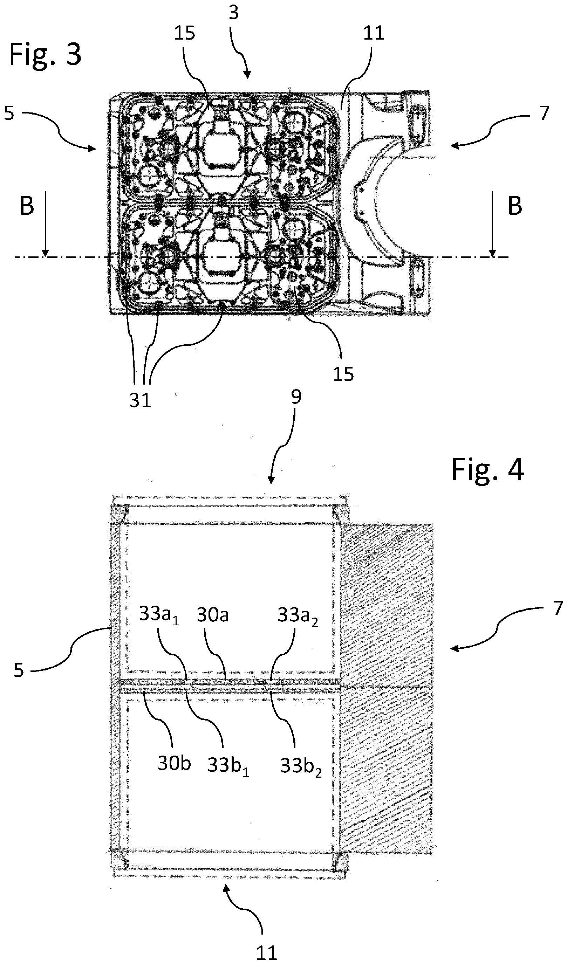

En se référant encore aux figures 1 et 2, on peut voir que le côté extérieur de la plaque terminale 15 porte une pluralité de raccords pour des conduits. Ces conduits correspondent respectivement aux entrées et aux sorties pour le gaz réactif d'anode, le gaz réactif de cathode et le fluide de refroidissement de la pile à combustible. Dans l'exemple illustré, ces entrées et ces sorties sont toutes regroupées sur la grande plaque terminale 15, de façon que tous ces raccords soient accessibles depuis l'extérieur de la coque 1. Conformément à un mode de réalisation avantageux, la portée périphérique de la grande plaque terminale 15 est fixée sur la coque 1 en au moins deux points, de sorte que la grande plaque terminale participe à la rigidité du bloc-pile à combustible. En se référant maintenant à la vue de côté de la figure 3, on peut voir que dans l'exemple illustré, la grande plaque terminale 15 est fixée sur la coque 1 au moyen de seize vis (référencées 31). On comprendra que la grande plaque terminale est munie à cet effet de perçages qui sont répartis plus ou moins régulièrement autour de la portée périphérique 29, et que les seize vis sont vissées dans la coque 1 à travers les perçages de la portée périphérique.

La figure 4 est une vue en coupe du bloc-pile à combustible selon B-B de la figure 3. On comprendra que les piles à combustibles logées dans la coque 1 du bloc-pile à combustible ne sont pas représentées dans la figure 4, de manière à ne pas surcharger le dessin. Toutefois, la position qu'occuperaient les piles à combustible si elles étaient présentes dans la coque est signalée par un contour en trait interrompu. La figure 4 montre notamment que chaque logement possède un fond qui est constitué par une paroi (référencées respectivement 30a et 30b) disposée à l'opposé de l'ouverture. Dans l'exemple illustré, les parois 30a, 30b sont parallèles aux côtés droit et gauche de la coque 1. Selon le mode de réalisation qui fait l'objet du présent exemple, chacun des quatre logements de la coque 1 comprend encore un guide agencé pour coopérer avec la petite plaque terminale d'une des piles à combustible pour la guider lors de la mise en place de la pile à combustible, ainsi que pour maintenir la position de la petite plaque terminale lorsque la pile à combustible est en place dans son logement. On comprendra que les quatre piles à combustible peuvent être mises en place dans la coque, ou alternativement en être retirées, un peu à la manière de quatre tiroirs. En se référant maintenant plus particulièrement aux figures 4 et 6, on peut voir que, dans l'exemple illustré, la plaque terminale 17 de la pile à combustible 13 porte deux broches (référencées 25a et 25b) qui sont orientées dans la direction d'empilement. On peut voir que ces broches sont fixées sur la plaque de fermeture 23 et qu'elles passent chacune à travers une des ouvertures circulaires de la structure porteuse 21 de façon à dépasser hors de cette dernière. On peut voir également qu'au fond des logements, les parois 30a, 30b présentent chacune deux cavités (référencées respectivement 33a₁, 33a₂ et 33b₁, 33b₂) qui sont disposées en vis-à-vis de l'ouverture du logement. On comprendra que les deux broches 25a, 25b que porte la plaque terminale de chacune des piles à combustible sont agencées pour venir s'insérer progressivement dans les deux cavités 33a₁ et 33a₂ ou 33b₁ et 33b₂, lorsque la pile à combustible est insérée dans un logement. La coopération des broches 25a, 25b avec les cavités 33a₁ et 33a₂ ou 33b₁ et 33b₂ permet tout à la fois le guidage de la pile à combustible lors de sa mise en place dans le logement, et son maintien en position, une fois que la pile à combustible est en place.

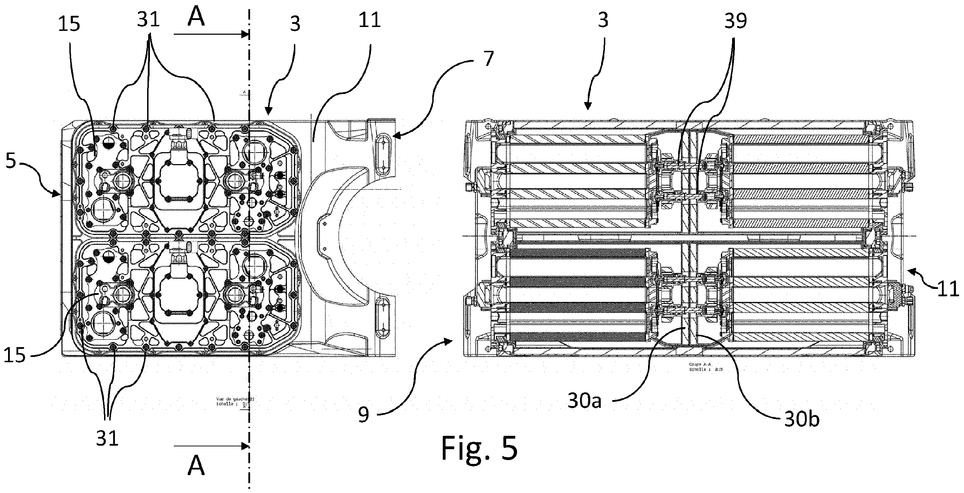

Les figures 5, 6, 7 et 8 illustrent notamment des moyens de connexion permettant de relier électriquement au moins une borne de connexion de la petite plaque terminale 17 de chacune des piles à combustible à un conducteur électrique qui est agencé dans le fond du logement de la pile à combustible, en regard de la petite plaque terminale. En se référant tout d'abord à la figure 6, on peut voir que la structure porteuse 21 de la plaque terminale 17 porte quatre connecteurs électriques femelles (qui sont chacun référencés 27). La figure 8 est une vue partielle agrandie de l'un de ces connecteurs électriques femelles. Dans le présent exemple, ces connecteurs sont du type BAL SEAL^{®}. Ils comprennent chacun un corps (ou douille) 41 comportant un alésage 43 agencé pour recevoir une fiche électrique 45. La paroi de l'alésage présente une rainure circulaire concentrique dans laquelle est logé un ressort hélicoïdal 47. Le diamètre des spires du ressort hélicoïdal est suffisant pour que le ressort dépasse de la rainure de sorte que, lorsque la fiche 45 est introduite dans le connecteur femelle, le ressort 47 se trouve comprimé entre la fiche électrique et le fond de la rainure. Le connecteur femelle 27 est en outre relié au collecteur de courant (non représenté) de la plaque terminale 17 par des moyens non représentés. Dans les connecteurs de ce type, le ressort hélicoïdal remplit deux fonctions. D'une part, il relie électriquement la fiche 45 au connecteur femelle 27. D'autre part, il permet de retenir la fiche 45 dans la douille 41 à frottement gras.

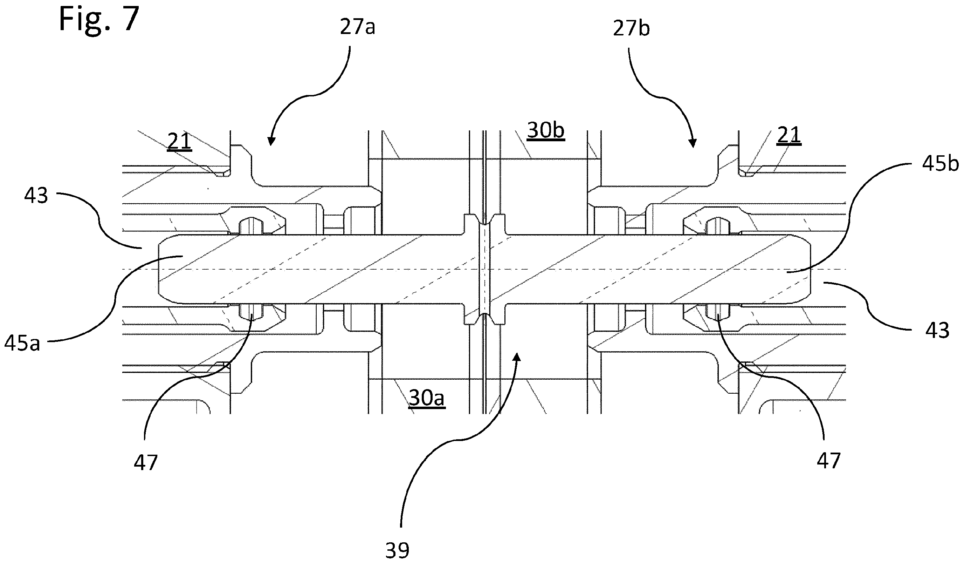

La figure 7 est une vue partielle agrandie montrant de manière schématique des moyens de connexion prévus pour relier les petites plaques terminales de deux piles à combustible contenues dans deux logements agencés symétriquement dans la coque et séparés l'un de l'autre par une paroi centrale qui forme le fond de chacun des logements. Les moyens de connexion illustrés permettent de relier électriquement les petites plaques terminales des deux piles à combustible à travers la paroi séparant leurs logements respectifs. Selon l'invention, les moyens de connexions illustrés dans la figure 7 conviennent tout aussi bien pour relier électriquement en parallèle deux piles à combustible, que pour les relier en série. Toutefois, selon le mode de réalisation qui fait l'objet du présent exemple, les deux piles à combustible sont reliées en série par leur petite plaque terminale. C'est la raison pour laquelle elles ne sont pas identiques. En effet, pour une telle liaison, il faut nécessairement qu'une des deux piles à combustible ait son pôle positif du côté de sa petite plaque terminale, alors que l'autre pile à combustible a sa petite plaque terminale du côté de son pôle négatif.

La figure 7 montre deux connecteurs femelles 27a et 27b qui sont respectivement montés sur les petites plaques terminales de deux piles à combustible (non représentées). On peut voir que les deux connecteurs femelles sont agencés en vis-à-vis, de part et d'autre de la paroi 30a, 30b qui constitue le fond des logements des deux piles à combustible. Les connecteurs femelles sont prévus pour coopérer avec les deux extrémités d'une barre de pontage 39 qui est montée dans une ouverture de la paroi 30a, 30b. Comme le montre la figure 7, la barre de pontage 39 est essentiellement constituée d'une paire de fiches mâles 45a, 45b agencées coaxialement dos-à-dos. La barre de pontage 39 est montée flottante dans une ouverture traversant la paroi, de façon que les deux fiches 45a et 45b dépassent respectivement des deux côtés de la paroi 30a, 30b.

En se référant toujours à la figure 7, on comprendra que lorsqu'on amène les deux piles à combustible (non représentées) en position dans leurs compartiments respectifs, et que ce faisant, la distance qui sépare les connecteurs femelles 27a et 27b des deux piles à combustible diminue jusqu'à devenir plus petite que la longueur de la barre de pontage 39, les deux extrémités de la barre de pontage viennent naturellement s'insérer dans les alésages des deux connecteurs femelles 27a et 27b. Comme c'est le ressort hélicoïdal de chacun des connecteurs femelles qui assure le contact électrique entre ce dernier et la barre de pontage, les extrémités de la barre de pontage peuvent coulisser dans les alésages des connecteurs femelles pour absorber un éventuel jeu longitudinal pouvant apparaître entre la paroi 30a, 30b est chacun des connecteurs femelles.

On comprendra en outre que diverses modifications et/ou améliorations évidentes pour un homme du métier peuvent être apportées aux modes de réalisation qui font l'objet de la présente description sans sortir du cadre de la présente invention définie par les revendications annexées.

## Revendications

1. Bloc-pile à combustible pour véhicule à propulsion électrique, comportant :
- au moins une pile à combustible (13) comprenant deux plaques terminales (15, 17), un empilement de cellules à combustible comprimé entre les deux plaques terminales, et une structure de liaison (19) ancrée solidement sur les deux plaques terminales et pré-tendue de manière à tirer ces dernières, l'une en direction de l'autre, pour comprimer l'empilement de cellules à combustible, et comprenant en outre des entrées et des sorties pour un gaz réactif d'anode, un gaz réactif de cathode et un fluide de refroidissement ;
- une coque (1) comprenant, à l'intérieur, un logement pour ladite au moins une pile à combustible (13), et comportant au moins une ouverture donnant accès au dit logement, le logement comportant un fond constitué par une paroi agencée à l'opposé de l'ouverture ;
**caractérisé en ce que** ladite au moins une pile à combustible (13) est insérée dans l'ouverture par une de ses extrémités, de façon qu'une des deux plaques terminales (dites ci-après la petite plaque terminale (17)) se trouve à l'intérieur du logement, alors que l'autre extrémité de la pile à combustible dépasse hors de l'ouverture, l'autre plaque terminale (dite ci-après la grande plaque terminale (15)) se trouvant à l'extérieur de la coque (1), et comportant une portée périphérique (29) prévue pour être maintenue en appui contre le pourtour de l'ouverture ; et
**en ce que** les entrées et les sorties pour le gaz réactif d'anode, le gaz réactif de cathode et le fluide de refroidissement sont agencées sur la grande plaque terminale.

2. Bloc-pile à combustible selon la revendication 1, **caractérisé en ce que** la portée périphérique (29) de la grande plaque terminale (15) est fixée sur la coque (1) en au moins deux points, de sorte que la grande plaque terminale participe à la rigidité du bloc-pile à combustible.

3. Bloc-pile à combustible selon la revendication 1 ou 2, **caractérisé en ce que** la coque (1) comprend un guide (33a₁, 33a₂, 33b₁, 33b₂) agencé dans le logement de façon à coopérer avec la petite plaque terminale (17) pour la guider lors de la mise en place de la pile à combustible (13) dans le logement, ainsi que pour maintenir la petite plaque terminale (17) en position lorsque la pile à combustible est en place.

4. Bloc-pile à combustible selon la revendication 3, **caractérisé en ce que** le guide comprend une cavité (33a₁, 33a₂, 33b₁, 33b₂) aménagée dans la paroi (30a, 30b) disposée au fond du logement à l'opposé de l'ouverture, et **en ce que** la petite plaque terminale (17) de la pile à combustible (13) comporte une broche (25a, 25b) orientée dans la direction d'empilement des cellules à combustible, la broche (25a, 25b) étant agencée pour venir s'insérer dans la cavité lorsque la pile à combustible (13) est mise en place dans la coque (1).

5. Bloc-pile à combustible selon l'une quelconque des revendications précédentes, **caractérisé en ce que** la petite plaque terminale (17) de la pile à combustible (13) comporte un collecteur de courant et un premier connecteur électrique (27) solidaire du collecteur de courant, le premier connecteur électrique (27) étant orienté en direction du fond du logement, et **en ce que** le fond du logement comporte un second connecteur électrique (45 ; 45a, 45b) agencé pour coopérer avec le premier connecteur électrique.

6. Bloc-pile à combustible selon l'une quelconque des revendications précédentes, **caractérisé en ce qu'**il comporte une paire de piles à combustible, **en ce que** la coque (1) comprend un côté latéral gauche (11) et un côté latéral droit (9) parallèles sensiblement symétriques l'un de l'autre par rapport à un plan de symétrie vertical, et comprend en outre deux ouvertures dans lesquelles sont respectivement insérées les deux piles à combustible de la paire, les deux ouvertures étant agencées symétriquement l'une sur le côté latéral gauche (11) et l'autre sur le côté latéral droit (9), et **en ce que** ladite paroi (30a, 30b) occupe une position confondue avec le plan de symétrie vertical entre le côté latéral gauche et le côté latéral droit de la coque (1), la paroi comportant une face gauche (30b) et une face droite (30a) qui constituent les fonds des logements auxquels donnent accès la paire d'ouvertures.

7. Bloc-pile à combustible selon les revendications 5 et 6, **caractérisé en ce que** le collecteur de courant de la petite plaque terminale (17) d'une des deux piles à combustible de la paire de piles à combustible constitue son pôle positif, alors que le pôle positif de l'autre pile à combustible est constitué par le collecteur de courant de sa grande plaque terminale (15), **en ce que** la petite plaque terminale (17) de chacune des deux piles à combustible comporte un connecteur électrique (27a, 27b) qui est solidaire de son collecteur de courant et qui est orienté en direction du fond du logement dans lequel se trouve la petite plaque terminale (17), et **en ce que** ladite paroi (30a, 30b) comporte deux autres connecteurs électriques (45a, 45b) qui sont agencés chacun pour coopérer avec le connecteur électrique (27a, 27b) de la petite plaque terminale d'une des deux piles à combustibles, lesdits deux autres connecteurs (45a, 45b) étant en outre reliés l'un à l'autre à travers la paroi (30a, 30b) de sorte que les deux piles à combustible sont connectées en série lorsque les deux piles à combustible de la paire sont en place dans leurs logements respectifs.

8. Bloc-pile à combustible selon l'une quelconque des revendications 1 à 5, **caractérisé en ce qu'**il comporte deux paires de piles à combustible, **en ce que** la coque (1) comprend un côté latéral gauche (11) et un côté latéral droit (9)parallèles et sensiblement symétriques l'un de l'autre par rapport à un plan de symétrie vertical, et comprend en outre deux paires d'ouvertures, les deux piles à combustible d'une première des deux paires de piles à combustible étant respectivement insérées dans les deux ouvertures d'une des deux paires d'ouvertures et les deux piles à combustible de la seconde paires de piles à combustible étant respectivement insérées dans les deux ouvertures de l'autre paire d'ouvertures, les deux ouvertures de chaque paire d'ouvertures étant agencées symétriquement l'une sur le côté latéral gauche (11) et l'autre sur le côté latéral droit (9), et **en ce que** ladite paroi (30a, 30b) occupe une position confondue avec le plan de symétrie vertical entre le côté latéral gauche et le côté latéral droit de la coque (1), la paroi comportant une face gauche (30b) et une face droite (30a) qui constituent les fonds des logements auxquels donnent accès les deux paires d'ouvertures.

9. Bloc-pile à combustible selon les revendications 5 et 8, **caractérisé en ce que** le collecteur de courant de la petite plaque terminale (17) d'une des deux piles à combustible de chaque paire de pile à combustible constitue le pôle positif de cette pile à combustible, alors que le pôle positif de l'autre pile à combustible de la même paire de pile à combustible est constitué par le collecteur de courant de sa grande plaque terminale (15), **en ce que** la petite plaque terminale (17) de chaque pile à combustible comporte un connecteur électrique (27a, 27b) qui est solidaire de son collecteur de courant et qui est orienté en direction du fond du logement dans lequel se trouve la petite plaque terminale (17), et **en ce que** ladite paroi (30a, 30b) comporte quatre autres connecteurs électriques (45a, 45b) qui sont agencés chacun pour coopérer avec le connecteur électrique (27a, 27b) de la petite plaque terminale d'une des piles à combustibles, lesdits quatre autres connecteurs (45a, 45b) étant en outre reliés deux à deux à travers la paroi (30a, 30b) de sorte que les deux piles à combustible de chacune des paires de piles à combustible sont connectées en série lorsque les deux piles à combustible de chacune des paires de piles à combustible sont en place dans leurs logements respectifs.
